# EUROPÄISCHE PATENTANMELDUNG

(11) **EP 0 829 197 A2**
(43) Veröffentlichungstag der Anmeldung: **18.03.1998**
(21) Anmeldenummer: 97890160.1
(22) Anmeldetag: 11.08.1997
(51) Int. Cl.: A01F 15/07, B65B 11/00

(54) **Wickelmaschine zum Umwickeln zylindrischer Gutballen mit einer Hüllfolie**

(30) Priorität: 09.08.1996 AT 1438/96
(71) Anmelder: Franz Biberauer Ges. m.b.H. & Co., 4360 Grein (AT); Riegler, Alois, 4363 Pabneukirchen (AT)
(72) Erfinder: Riegler, Alois, 4363 Pabneukirchen (AT)
(74) Vertreter: Hübscher, Heiner, Dipl.-Ing.

(57) **Zusammenfassung**

Eine Wickelmaschine (1) zum Umwickeln zylindrischer Gutballen (B) mit einer Hüllfolie besteht aus einer Wälzeinrichtung (5) zum Umwälzen der Ballen (B) um eine horizontale Wälzachse (H) und einer Wickeleinrichtung (4) zum Aufbringen der Hüllfolie mit einem relativ zur Wälzeinrichtung (5) um eine Vertikalachse (V) umlaufenden Folienabzug (43), wobei die Wälzeinrichtung (5) zwei zueinander parallele, horizontale Förderwaizen (52, 53) aufweist, die frei vorkragend auf gegensinnig zueinander verstellbaren Walzenträgern (51) des Maschinengestells (2) lagern.

Um nach dem Ballenumwickeln auf rationelle Weise ein stirnseitiges Aufstellen der Gutballen zu erreichen, ist am Maschinengestell (2) zwischen den Walzenträgern (51) ein Stellarm (6) angeordnet und mit einem im Höhenbereich der Förderwalzenachsen liegenden Stellkopf (64) achsparallel zwischen die Förderwalzen (52, 53) ausfahrbar.

## Beschreibung

Die Erfindung bezieht sich auf eine Wickelmaschine zum Umwickeln zylindrischer Gutballen, insbesondere Futterballen, mit einer Hüllfolie, bestehend aus einer Wälzeinrichtung zum Umwälzen der Ballen um eine horizontale Wälzachse und einer Wickeleinrichtung zum Aufbringen der Hüllfolie mit einem relativ zur Wälzeinrichtung um eine Vertikalachse umlaufenden Folienabzug, wobei die Wälzeinrichtung zwei zueinander parallele, horizontale Förderwalzen aufweist, die frei vorkragend auf gegensinnig zueinander verstellbaren Walzenträgern des Maschinengestells lagem.

Diese Wickelmaschinen erlauben das Einwickeln von Futterballen od. dgl. in eine Hüllfolie zum Silieren, wozu der zylindrisch vorgepreßte Ballen um eine Horizontalachse umgewälzt und gleichzeitig dabei die Folie mit einem Folienabzug horizontal um den Ballen herumgewickelt wird. Als einfache Wälzeinrichtung gibt es an einem Schwenkarmpaar gelagerte Förderwalzen, die den Gutballen zwischen sich aufnehmen und durch den Antrieb zumindest einer der Förderwalzen umwälzen. Der Folienabzug ist über einen Dreharm um eine Vertikalachse drehbar an einem Galgen montiert und kann so um die Wälzeinrichtung herumbewegt werden. Das Maschinengestell dieser Wickelmaschine ist mit einem Anbaurahmen zum Anbau am Dreilenkersystem eines Schleppers od. dgl. ausgestattet, so daß Wälz- und Wickeleinrichtung vom Schlepper her angetrieben werden können und sich die Wickelmaschine mittels des Schleppers nicht nur selbst zu einem entsprechenden Einsatzort transportieren läßt, sondern sich mit der Wickelmaschine bzw. den Förderwalzen auch die Gutballen etwa nach dem Umwickeln mit Hüllfolie zu einem Lagerplatz bringen lassen. Zum Aufnehmen und auch zum Ablegen der Gutballen können die Förderwalzen mittels der verstellbaren Walzenträger zangenförmig auseinander- bzw. zusammengeschwenkt werden, was gegebenenfalls zusammen mit einer Hubbewegung über die Schlepperhydraulik ein Hantieren der Ballen erlaubt. Allerdings können die Ballen dabei nur liegend, also mit horizontaler Achse hantiert werden und ein Aufstellen der Ballen auf eine der Stirnflächen erfordert ein mühsames händisches Zugreifen oder eigene Hubgeräte. Da auf Grund des Wickelvorganges die Ballenstirnseiten mehrschichtig gewickelt sind, eignen sich die Stirnflächen als Stand- und Deckfläche, da hier die mehrschichtige Folienlage einen besseren Schutz vor Beschädigungen, Witterungseinflüssen u. dgl. bietet, der stehende Ballen günstigere Wasserablaufverhältnisse mit sich bringt und nicht zuletzt eine höhere Standfestigkeit, vor allem auf geneigtem Boden gewährleistet. Auch bei an sich einfachem Konzept der Wickelmaschine muß somit wegen der Forderung nach einem stirnseitigen Aufstellen der Gutballen ein zusätzlicher Arbeits- und/oder Geräteaufwand in Kauf genommen werden.

Der Erfindung liegt daher die Aufgabe zugrunde, diese Mängel zu beseitigen und eine Wickelmaschine der eingangs geschilderten Art zu schaffen, die ohne Beeinträchtigung ihrer Wickel- und Transportmöglichkeiten mit vergleichsweise geringem Mehraufwand nach dem Wickelvorgang nicht nur ein Ablegen der gewickelten Ballen, sondern darüber hinaus auch ein rationelles Aufstellen dieser Ballen erlaubt.

Die Erfindung löst diese Aufgabe dadurch, daß am Maschinengestell zwischen den Walzenträgern ein Stellarm angeordnet und mit einem im Höhenbereich der Förderwalzenachsen liegenden Stellkopf achsparallel zwischen die Förderwalzen ausfahrbar ist. Dieser Stellarm ist im Maschinengestell so untergebracht, daß er in seiner Ausgangsposition den Bewegungs- und Wickelbereich der Ballen bzw. der Wälz- und Wickeleinrichtungen nicht beeinträchtigt und die üblichen Arbeitsabläufen der Wickelmaschine störungsfrei ablaufen können. Soll dann aber ein Ballen nach dem Einwickeln auf eine Stirnfläche aufgestellt werden, braucht lediglich der Stellarm mit seinem Stellkopf unter den noch auf den Förderwalzen aufliegenden Ballen bis höchstens zu dessen Mittenbereich auszufahren, was händisch oder zweckmäßigerweise über einen Stelltrieb durchgeführt werden kann, worauf dann ein Öffnen der Förderwalzen den Ballen im Mantelbereich auf den Stellkopf und im Bereich der maschinenabgewandten Stirnfläche bodenseits ablegt, so daß durch ein Anheben des Maschinengestells über die Traktorhydraulik und/oder ein weiteres Ausfahren des Stellarmes bzw. Nachfahren des Schleppers ein Hochkippen des schrägliegenden Ballens bis zum Aufstellen auf die bodenseitige Stirnfläche erfolgt. Damit ist es möglich, je nach Einsatz des Stellarmes die Gutballen wunschgemäß abzulegen oder aufzustellen, ohne dabei zusätzlich Handanlegen oder Hilfsgeräte einsetzen zu müssen.

Um beim Aufstellen durch die sich ergebende Relativbewegung zwischen Stellkopf und Ballen bzw. Ballenhülle Beschädigungen der Hülle zu vermeiden, weist der Stellkopf eine um eine Horizontalachse drehbare Stützrolle, vorzugsweise mit einer mittigen Manteleinschnürung, auf, so daß diese Stützrolle beim Aufkippen des Ballens entlang einer Mantelerzeugenden abrollen kann. Durch eine Manteleinschnürung in der Stützrollenoberfläche kommt es zu einer zusätzlichen Zentrierung des Ballens gegenüber der Stützrolle, was ein ungewolltes seitliches Wegrutschens des Ballens unterbindet.

Besteht der Stellarm aus einem Ausleger, der über einen Stelltrieb, vorzugsweise Hubzylinder, schiebeverstellbar in einer Längsführung des Maschinengestells abgestützt ist und an seinem freien Ende den Stellkopf trägt, entsteht eine einfache und robuste Konstruktion, die sich auch gut zum Nachrüsten einer Wickelmaschine mit einer entsprechenden Aufstellhilfe eignet.

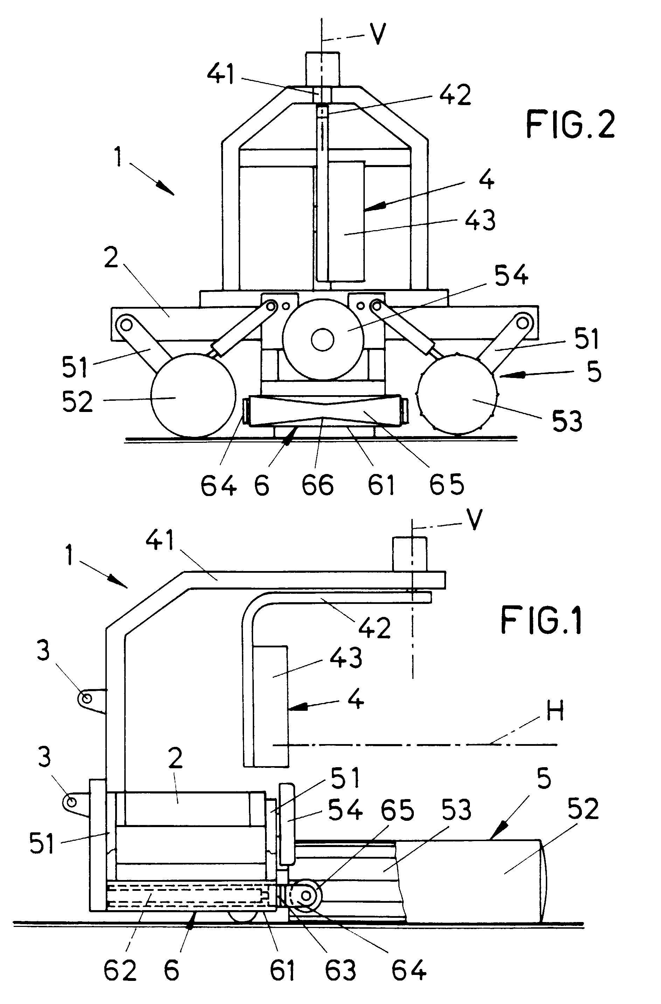

In der Zeichnung ist der Erfindungsgegenstand rein schematisch veranschaulicht, und zwar zeigen
- Fig. 1 und 2: eine erfindungsgemäße Wickelmaschine in teilgeschnittener Seitenansicht und Rückansicht sowie
- Fig. 3 und 4: diese Wickelmaschine beim Einsatz während des Umwickelns eines Gutballens bzw. beim Aufstellen des gewickelten Gutballens jeweils in schematischer Seitenansicht.

Eine als Anbaugerät ausgebildete Wickelmaschine 1 weist ein Maschinengestell 2 mit Anlenkstellen 3 für den Anschluß an das Dreilenkersystem eines Schleppers auf, welches Maschinengestell 2 eine Wickeleinrichtung 4 und eine Wälzeinrichtung 5 abstützt. Die Wickeleinrichtung 4 besteht aus einem Galgen 41, an dem über einen um eine Vertikalachse V drehbaren Schwenkarm 42 ein Folienabzug 43 für eine nicht weiter dargestellte Hüllfolie montiert ist. Die Wälzeinrichtung 5 umfaßt zwei auf gegensinnig zueinander schwenkverstellbaren Walzenträgern 51 gelagerte horizontale und zueinander parallele Förderwalzen 52, 53, von denen eine antreibbar ist. Die Förderwalzen 52, 53 ragen zangenartig frei vom Maschinengestell 2 aus vor und erlauben durch die angetriebene Förderwalze 53 ein Umwälzen eines aufgenommenen zylindrischen Gutballens um eine horizontale Wälzachse H, wobei eine stimseitige Führungsrolle 54 für eine axiale Positionierung des Ballens auf den Förderwalzen 52, 53 sorgt.

Zwischen den Walzenträgern 51 ist am Maschinengestell 2 im Höhenbereich der Förderwalzen ein Stellarm 6 angeordnet, der aus einem in einer Längsführung 61 mittels eines Stellzylinders 62 schiebeverstellbar abgestützten Ausleger 63 mit am freien Ende angeordnetem Stellkopf 64 besteht. Der Stellkopf 64 kann über den Ausleger achsparallel zwischen die Förderwalzen 52, 53 ausgefahren werden, wobei der Stellkopf 63 eine um eine Horizontalachse drehbare Stützrolle 65 mit einer mittigen Manteleinschnürung 66 aufweist.

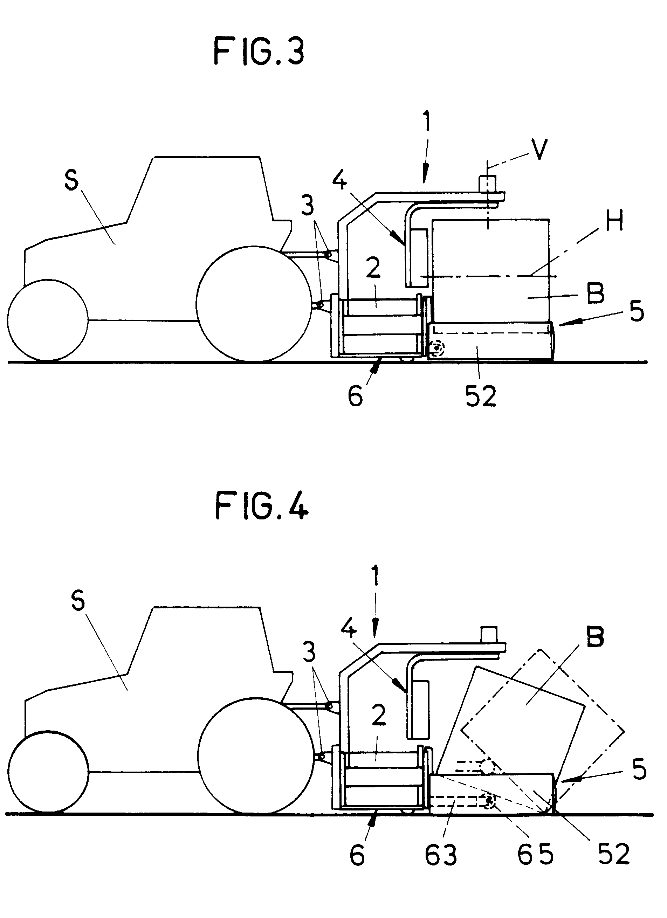

Wie in Fig. 3 und 4 angedeutet, wird die Wickelmaschine 1 zum Einsatz an einen Schlepper S angebaut und mit diesem zum Einsatzort gebracht. Hier wird ein zu wickelnder Gutballen B mit liegender Achse zwischen den Förderwalzen 52, 53 aufgenommen und durch ein gleichzeitiges Umwälzen des Ballens B um die horizontale Wälzachse H und einem kreisenden Umwickeln um die Vertikalachse V mit einer Hüllfolie aus dem Folienabzug 43 vollständig und luftdicht eingewickelt (Fig. 3). Zum Abgeben des umwickelten Ballens fährt der Schlepper S gegebenenfalls an den gewünschten Lagerplatz und bevor die Förderwalzen 52, 53 öffnen, wird der Stellarm 6 durch Beaufschlagen des Stellzylinders 62 ausgefahren, so daß der Ausleger 63 mit dem Stellkopf 64 bis höchstens zur Längenmitte des Ballens B zwischen den Förderwalzen 52, 53 vorragt. Nun wird durch ein Aufschwenken der Walzenträger 51 der Gutballen B von den Förderwalzen 52, 53 auf den Stellkopf 64 einerseits und auf den Boden anderseits abgelegt (Fig. 4) und durch ein Anheben der Wickelmaschine 1 mit der Schlepperhydraulik und/oder ein Zurückfahren des Schleppers der Ballen B mittels des Stellkopfes 64 aufgekippt (strichpunktierte Lage in Fig. 4) und schließlich auf seiner bodenseitigen Stirnfläche aufgestellt. Der Stellarm 6 wird in seine Ausgangsposition zurückgefahren und die Wickelmaschine 1 in Normalposition abgesenkt und neuerlich zum Einsatzort für den nächsten Wickelvorgang gebracht.

Die Wickelmaschine 1 erlaubt durch ihre Ausstattung mit dem Stellarm 6 auf einfache und rationelle Weise ein stirnseitiges Aufstellen gewickelter Gutballen B, was die Einsatzfähigkeit dieser Wickelmaschinen beträchtlich verbessert.

## Patentansprüche

1. Wickelmaschine (1) zum Umwickeln zylindrischer Gutballen (B), insbesondere Futterballen, mit einer Hüllfolie, bestehend aus einer Wälzeinrichtung (5) zum Umwälzen der Ballen (B) um eine horizontale Wälzachse (H) und einer Wickeleinrichtung (4) zum Aufbringen der Hüllfolie mit einem relativ zur Wälzeinrichtung (5) um eine Vertikalachse (V) umlaufenden Folienabzug (43), wobei die Wälzeinrichtung (5) zwei zueinander parallele, horizontale Förderwalzen (52, 53) aufweist, die frei vorkragend auf gegensinnig zueinander verstellbaren Walzenträgern (51) des Maschinengestells (2) lagern, dadurch gekennzeichnet, daß am Maschinengestell (2) zwischen den Walzenträgern (51) ein Stellarm (6) angeordnet und mit einem im Höhenbereich der Förderwalzenachsen liegenden Stellkopf (64) achsparallel zwischen die Förderwalzen (52, 53) ausfahrbar ist.

2. Wickelmaschine nach Anspruch 1, dadurch gekennzeichnet, daß der Stellkopf (64) eine um eine Horizontalachse drehbare Stützrolle (65), vorzugsweise mit einer mittigen Manteleinschnürung (66), aufweist.

3. Wickelmaschine nach Anspruch 1 oder 2, dadurch gekennzeichnet, daß der Stellarm (6) aus einem Ausleger (63) besteht, der über einen Stelltrieb, vorzugsweise Hubzylinder (62), schiebeverstellbar in einer Längsführung (61) des Maschinengestells (2) abgestützt ist und an seinem freien Ende den Stellkopf (64) trägt.
